(19) **Europäisches Patentamt**

**European Patent Office**

**Office européen des brevets**

(11) **EP 1 159 176 B1**

(12) **EUROPÄISCHE PATENTSCHRIFT**

(45) Veröffentlichungstag und Bekanntmachung des Hinweises auf die Patenterteilung:
**04.06.2003  Patentblatt 2003/23**

(51) Int Cl.$^7$: **B60T 8/56**

(21) Anmeldenummer: **00910608.9**

(86) Internationale Anmeldenummer:
**PCT/EP00/00541**

(22) Anmeldetag: **25.01.2000**

(87) Internationale Veröffentlichungsnummer:
**WO 00/055024 (21.09.2000 Gazette 2000/38)**

(54) **VERFAHREN UND VORRICHTUNG ZUR VARIABLEN EINSTELLUNG DER BREMSKRAFT IN EINER HYDRAULISCHEN BREMSANLAGE EINES KRAFTFAHRZEUGS**

METHOD AND DEVICE FOR VARIABLY ADJUSTING THE BRAKE FORCE IN A HYDRAULIC BRAKE SYSTEM OF A MOTOR VEHICLE

PROCEDE ET DISPOSITIF POUR REGLER DE FACON VARIABLE LA FORCE DE FREINAGE DANS UN SYSTEME DE FREINAGE HYDRAULIQUE D'UN VEHICULE AUTOMOBILE

(84) Benannte Vertragsstaaten:
**ES FR GB IT**

(30) Priorität: **17.03.1999  DE 19911902**

(43) Veröffentlichungstag der Anmeldung:
**05.12.2001  Patentblatt 2001/49**

(73) Patentinhaber: **DaimlerChrysler AG 70567 Stuttgart (DE)**

(72) Erfinder:
• **FRENTZ, Georg D-72622 Nürtingen (DE)**
• **RIEDEL, Hans-Georg D-75177 Pforzheim (DE)**

(56) Entgegenhaltungen:
**DE-C- 4 427 170          GB-A- 2 297 134**

• **PATENT ABSTRACTS OF JAPAN vol. 017, no. 430 (M-1460), 10. August 1993 (1993-08-10) & JP 05 092760 A (TOYOTA MOTOR CORP), 16. April 1993 (1993-04-16)**

**Beschreibung**

Die Erfindung betrifft ein Verfahren und eine Vorrichtung zur variablen Einstellung der Bremskraft in einer hydraulischen Bremsanlage eines Kraftfahrzeugs nach dem Oberbegriff des Anspruches 1 bzw. 15.

Aus der DE 35 26 556 A1 ist eine Bremsanlage für Kraftfahrzeuge bekannt, die einen als Tandemzylinder ausgebildeten Hauptzylinder umfaßt, welcher von einem Bremspedal betätigt wird. Weiterhin ist ein Hilfsdruck-Versorgungssystem vorgesehen, das eine Hydraulikpumpe zur Erzeugung des erforderlichen Bremsdrucks und einen die Pumpe betätigenden elektrischen Motor umfaßt, wobei das von der Pumpe geförderte Hydraulikmedium zur Erzeugung der erforderlichen Bremskraft der Radbremseinrichtung zugeführt wird.

Aus der Druckschrift DE 44 27 170 C1 ist ein Verfahren zur Sicherstellung der Bremswirkung von Bremsen von Fahrzeugen bei Nässe bekannt. Hierzu wird über eine sensoreinrichtung auf das Vorhandensein von Nässe geschlossen. Wenn Nässe vorhanden ist, wird die Zeitdauer ermittelt, während der die Bremsen des Fahrzeuges nicht betätigt worden sind. überschreitet diese Zeitdauer einen Zeitschwellenwert, so wird ein Bremsvorgang vorgenommen, bei dem eine für den Fahrer nicht spürbare Fahrzeugverzögerung eingestellt wird. Aufgrund dieses Bremsvorganges verdampft das sich an der Bremse niederschlagende Wasser und es wird die sofortige volle Funktionsfähigkeit der Bremse sichergestellt. Darüber hinaus offenbart die DE 44 27 170 C1, die Temperatur der Bremsteile zu erfassen und einen Bremsvorgang für den Fall vorzunehmen, dass die Bremsentemperatur einen Temperaturgrenzwert unterschreitet. Eine Ermittlung des Reibwertes der Paarung Bremsscheibe - Bremsbelag und eine darauf basierende Kompensation eines nachlassenden Reibwertes durch eine Erhöhung des Bremsdruckes ist nicht offenbart.

Eine weitere Einrichtung zum Messen und/oder Regeln der Bremskraft in der Bremsanlage eines Kraftfahrzeugs ist aus der EP 0 189 082 A2 bekannt. In dieser Druckschrift wird vorgeschlagen, die Bremskraft der Radbremsen in der Weise einzustellen, daß ein zulässiger Temperaturhöchstwert nicht überschritten wird. Hierdurch soll ein funktionierender Dauerbetrieb mit hoher, gleichbleibender Bremskraft ermöglicht werden. Diese Einrichtung hat aber den Nachteil, daß relativ starke Zeitverzögerungen bei der Wärmeausbreitung in der Bremsanlage bei der Regelung zu berücksichtigen sind, wodurch das zu regelnde Bremssystem relativ träge reagiert und maximale Bremskräfte nicht kontinuierlich eingehalten werden können.

Aus der Veröffentlichung PATENT ABSTRACTS OF JAPAN vol. 017, no. 430 (M-1460), ist eine Vorrichtung bekannt, mit der ein Sollwert für den Bremsdruck ermittelt wird, der dem Bremsdruck entspricht, der an den Vorderrädern aufgrund der Betätigung des Bremspedals durch den Fahrer einzustellen ist. Bei der Berechnung dieses Sollwertes wird der für die Paarung Bremsscheibe - Bremsbelag vorliegende Reibwert berücksichtigt. Dieser Reibwert wird in Abhängigkeit der Temperatur und der Drehgeschwindigkeit der Bremsscheibe ermittelt. Eine Erhöhung des Bremsdruckes, für den Fall einer unzulässigen Unterschreitung des Ist-Reibwertes gegenüber dem Soll-Reibwert ist nicht vorgesehen.

Die GB-A-2 297 134 A betrifft ein Verfahren und eine Vorrichtung zur Steuerung eines ABS/ASR-Systems. Dabei ist es das Ziel, den Vakuum-Bremskraft-Verstärker ganz oder teilweise einzusparen, und die erforderliche Bremskraftverstärkung durch geeignete Ansteuerung einer Rückförderpumpe und von Ventilen, die jeweils im Hydroaggregat enthalten sind, hydraulisch zu realisieren. Neben- der Realisierung einer Drucksteuerung, bei der der Bremsdruck in den Radbremszylindern entsprechend der durch den Fahrer vorgenommenen Betätigung des Bremspedals eingestellt wird, wird auch eine Funktion beschrieben, mit der ein Nachlassen des Reibwertes zwischen Bremsbelägen und Bremsscheiben, welches als Fading bezeichnet wird, erkannt wird und entsprechende Gegenmaßnahmen ergriffen werden. Um ein Nachlassen des Reibwertes erkennen zu können, werden verschiedene Auswertungen vorgenommen. So wird überprüft, ob der im Hauptbremszylinder vorherrschende Bremsdruck größer als ein Schwellenwert ist; ob eine Betätigung des Bremslichtschalters vorliegt; ob die ABS-Regelung aktiv ist; ob die Geschwindigkeit des Fahrzeuges größer als Null bzw. ein Schwellenwert ist; ob das ABS-System ordnungsgemäß arbeitet. Wird ein Nachlassen des Reibwertes erkannt, so wird der Druck im Radbremszylinder erhöht. Vorzugsweise wird der Druck stufenweise so weit erhöht, bis an allen Rädern des Fahrzeuges die ABS-Regelung einsetzt, oder eine maximal zulässige vorgebbare Druckdifferenz zwischen dem Druck des Radbremszylinders und dem Druck im Hauptbremszylinder erreicht ist. Die Ermittlung des Ist-Reibwertes der Paarung Bremsscheibe - Bremsbelag und eine Auswertung desselben mit einem Soll-Reibwert ist nicht offenbart. Ebenso ist auch nicht offenbart, den Bremsruck auf einen mit einem Korrekturfaktor multiplizierten Wert zu erhöhen, sofern der Ist-Reibwert innerhalb eines definierten Reibwert-Stabilisierungsbereiches liegt.

Vor diesem Hintergrund ergibt sich folgende Aufgabe: Es soll eine nachlassende Bremswirkung in hydraulischen Bremsanlagen zum einen einfach und zuverlässig erkannt und zum anderen in weiten Bereichen, ohne dass dabei eine Überlastung der Bremsanlage auftritt, kompensiert werden.

Dieses Aufgabe wird erfindungsgemäß mit den Merkmalen des Anspruches 1 bzw. 15 gelöst.

Der Ist-Reibwert zwischen Bremsscheibe und Bremsbelag einer Radbremse kennzeichnet die Umsetzung der Spannkraft der Bremszange in die Verzögerungskraft an der Bremsscheibe. Unterschreitet der Ist-Reibwert zwischen Bremsscheibe und Bremsbelag unzulässigerweise den Soll-Reibwert, so wird der Bremsdruck heraufgesetzt, wodurch eine verminderte Bremsleistung, die als Folge von Überhitzung, Verschleiß oder Umwelteinflüssen wie Nässe, Verschmutzung oder Eisbildung entstehen kann, zumindest teilweise ausgeglichen werden kann, so daß weder subjektiv noch objektiv eine Verschlechterung der Bremsleistung eintritt. Um eine Überbeanspruchung der Bremsanlage und ein daraus resultierendes Bremsfading bzw. einen möglichen Bremsausfall als Folge der automatisch durchgeführten Bremsdruckerhöhung zu verhindern, wird als zusätzliche Bedingung vor der Bremsdruckerhöhung abgeprüft, ob der Ist-Reibwert innerhalb eines definierten Stabilisierungsbereichs liegt, der ein Band von Reibwerten unterhalb des ein Maximum markierenden Soll-Reibwerts umfaßt. Liegt der Ist-Reibwert innerhalb dieses Stabilisierungsbereichs, so wird die Bremsdruckerhöhung durchgeführt. Liegt der Ist-Reibwert unterhalb des Stabilisierungsbereichs, so ist es aus Gründen eines Überlastschutzes nicht zweckmäßig, eine Bremsdruckerhöhung durchzuführen; in diesem Fall unterbleibt die Bremsdruckerhöhung und es wird ein Fehler- bzw. Alarmsignal zur Anzeige gebracht, welches den Fahrer auf den schlechten Bremsenzustand hinweist.

Der Stabilisierungsbereich kann fest vorgegeben werden oder im laufenden Betrieb anhand von sich ändernden Zustands- oder Betriebsgrößen wie zum Beispiel maximal erreichbare Verzögerung, Temperatur der Bremsanlage, Benetzung der Bremsenteile mit Feuchtigkeit etc. ermittelt werden, wodurch ein hohes Maß an Flexibilität erreicht wird.

In vorteilhafter Weiterbildung wird der Stabilisierungsbereich in einen Konstantbereich, in dem über schlechter werdende Reibwerte hinweg eine konstante, maximale Bremsverzögerung eingehalten werden kann, und in einen Gradientenbereich, in dem zwar der Bremsdruck überhöht wird, ohne jedoch die maximale Bremsverzögerung zu erreichen, unterteilt. Der Konstantbereich umfaßt hierbei höhere Reibwerte als der Gradientenbereich, beide Bereiche zusammen füllen den Stabilisierungsbereich zweckmäßig vollständig aus. Die Grenze zwischen Konstantbereich und Gradientenbereich - der untere Reibwert des Konstantbereichs - wird vorteilhaft variabel eingestellt. Es ist insbesondere zweckmäßig, mit zunehmender Temperatur der Radbremseinrichtung den unteren Reibwert des Konstantbereichs in Richtung der unteren Grenze des Gradientenbereichs zu verschieben, wodurch der Konstantbereich auf Kosten des Gradientenbereichs ausgedehnt wird. Durch diese Verschiebung des unteren Reibwerts des Konstantbereichs wird über einen zunehmenden Bereich kleiner Reibwerte eine konstante Verzögerung erreicht, ohne die der Funktionssicherheit dienende untere Grenze des Stabilisierungsbereichs weiter in Richtung kleinere Reibwerte zu verschieben.

Der Bremsdruck wird zur Kompensierung nachlassender Bremskräfte mit einem Korrekturfaktor größer als eins beaufschlagt, der sich zweckmäßig in Abhängigkeit des gemessenen oder berechneten Ist-Reibwerts, des Soll-Reibwerts sowie dem unteren Grenzwert des aktuellen Bereichs - dem Gradientenbereich oder dem Konstantbereich - errechnet. Der Korrekturfaktor steigt dabei vorteilhaft im Konstantbereich vom Wert 1 ausgehend mit abnehmenden Reibwerten linear an und fällt anschließend im Gradientenbereich mit abnehmenden Reibwerten kontinuierlich und linear bis zum Erreichen des Wertes 1 beim unteren Reibwert des Gradientenbereichs ab.

Der Korrekturfaktor wird im Konstantbereich immer größer, je kleiner der untere Reibwert des Konstantbereichs wird, je mehr also der untere Reibwert des Konstantbereichs in Richtung der unteren Grenze des Gradientenbereichs verschoben wird. Damit kann der Tatsache Rechnung getragen werden, daß mit zunehmender Temperatur ein zunehmender Bremsdruck zum Ausgleich des temperaturbedingten Bremsfadings erforderlich ist.

Weitere Vorteile und zweckmäßige Ausführungsformen sind den weiteren Ansprüchen, der Figurenbeschreibung und den Zeichnungen zu entnehmen. Es zeigen:

Fig. 1   ein Diagramm mit dem Verlauf des Korrekturfaktors zur Erhöhung des Bremsdrucks in Abhängigkeit des Reibwerts,

Fig. 2   ein Diagramm mit dem Verlauf eines um den Korrekturfaktor überhöhten Reibwerts in Abhängigkeit des tatsächlichen Ist-Reibwerts.

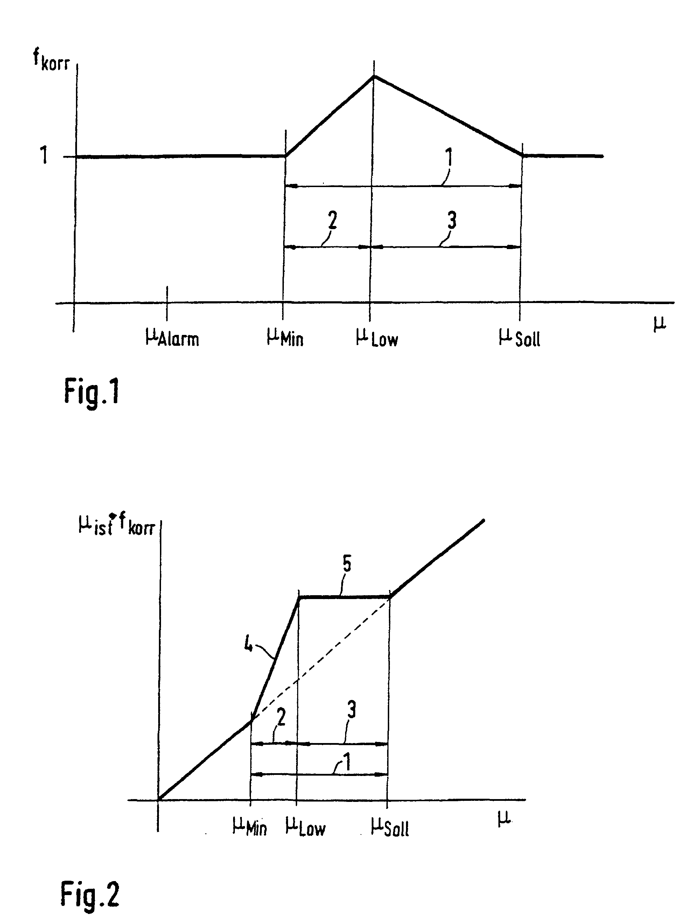

Gemäß Fig. 1 sind die auf der Abszisse aufgetragenen Reibwerte $\mu$ zwischen Bremsscheibe und Bremsbelag einer Radbremse in verschiedene Bereiche unterteilt. Zwischen einem unteren Grenzwert $\mu_{min}$ und einem Soll-Reibwert $\mu_{soll}$, der zugleich das üblicherweise erreichbare Reibwert-Maximum zwischen Bremsscheibe und Bremsbelag markiert, erstreckt sich ein Stabilisierungsbereich 1, innerhalb dem zusätzliche Maßnahmen zur Verstärkung der Bremswirkung einer hydraulischen, insbesondere einer elektrohydraulischen Fahrzeugbremse ergriffen werden. Der Stabilisierungsbereich 1 unterteilt sich in einen unteren Gradientenbereich 2 und einen oberen Konstantbereich 3, wobei der Gradientenbereich 2 zwischen dem die untere Grenze des Stabilisierungsbereichs 1 markierenden unteren Reibwert $\mu_{min}$ und dem die untere Grenze des Konstantbereichs 3 markierenden Reibwerts $\mu_{low}$ und der Konstantbereich 3 zwischen dem Reibwert $\mu_{low}$ und dem Soll-Reibwert $\mu_{soll}$ liegt. Der Gradientenbereich 2 und der Konstantbereich 3 grenzen unmittelbar aneinander, beide Bereiche 2, 3 füllen den Stabilisierungsbereich 1 vollständig aus.

Der Korrekturfaktor $f_{korr}$ dient zum Ausgleich verminderter Reibwerte, um auch bei verschlechterten Reibwerten eine gewünschte Fahrzeugverzögerung zu gewährleisten. Der Korrekturfaktor $f_{korr}$ wird mit dem in der elektrohydraulischen Bremse rechnerisch ermittelten, einem bestimmten Pedaldruck des Fahrers entsprechenden Bremsdruck multipliziert, wodurch eine nachlassende Bremswirkung kompensiert werden kann. Der Korrekturfaktor $f_{korr}$ nimmt

lediglich innerhalb des Stabilisierungsbereichs 1 einen Wert größer als eins ein, außerhalb des Stabilisierungsbereichs 1 beträgt der Wert des Korrekturfaktors gleich eins, so daß nur bei Ist-Reibwerten $\mu_{ist}$ innerhalb des Stabilisierungsbereichs 1 eine Bremsdruck-Überhöhung durchgeführt wird, nicht jedoch oberhalb der oberen Grenze des Stabilisierungsbereichs 1, dem Soll-Reibwert $\mu_{soll}$, und unterhalb der unteren Grenze des Stabilisierungsbereichs 1, dem unteren Reibwert $\mu_{min}$.

Die Ermittlung des Korrekturfaktors in Abhängigkeit des tatsächlichen Ist-Reibwerts sowie die Multiplikation des Korrekturfaktors mit dem dem Pedaldruck des Fahrers entsprechenden, in der Bremseinrichtung ermittelten Bremsdruck bietet den Vorteil, daß unmittelbar und ohne Zeitverlust auf eine Verringerung des Ist-Reibwerts reagiert werden kann. Das Bremssystem kann unabhängig von der physikalischen Ursache des Reibwertverlusts zumindest innerhalb des Konstantbereichs 3 auf seinem ursprünglichen, konstanten Bremsniveau gehalten werden.

Innerhalb des Stabilisierungsbereichs 1 ist der Wert des Korrekturfaktors $f_{korr}$ größer als eins, wobei die Funktion des Korrekturfaktors in Abhängigkeit des Reibwerts bei dem unteren bzw. dem oberen Grenzwert $\mu_{min}$, $\mu_{soll}$ bei eins beginnend zu dem zwischen Gradientenbereich 2 und Konstantbereich 3 liegenden Reibwert $\mu_{min}$ hin linear ansteigt. Beim Reibwert $\mu_{min}$ nimmt die Funktion des Korrekturfaktors ein Maximum ein, die Funktion des Korrekturfaktors nimmt bei linearem Anstieg Dreiecksform ein.

Innerhalb des Konstantbereichs 3 berechnet sich der Korrekturfaktor $f_{korr}$ in Abhängigkeit des momentanen Ist-Reibwerts $\mu_{ist}$ gemäß der linearen Beziehung

$$f_{korr} = 1 + (\mu_{soll}/\mu_{low} - 1) * (\mu_{soll} - \mu_{ist}) / (\mu_{soll} - \mu_{low}),$$

innerhalb des Gradientenbereichs 2 wird der Korrekturfaktor $f_{korr}$ nach der linearen Gesetzmäßigkeit

$$f_{korr} = 1 + (\mu_{ist} - \mu_{min}) / (\mu_{low} - \mu_{min}) * (\mu_{soll}/\mu_{low} - 1)$$

ermittelt.

Es kann zweckmäßig sein, anstelle einer linearen Funktion für den Korrekturfaktor $f_{korr}$ in Abhängigkeit des Ist-Reibwerts $\mu_{ist}$ einen nichtlinearen Verlauf vorzugeben.

Der aktuelle Ist-Reibwert $\mu_{ist}$ wird vorteilhaft aus der gemessenen oder rechnerisch ermittelten Fahrzeugverzögerung und dem aktuell anliegenden Bremsdruck ermittelt. Es kann aber auch zweckmäßig sein, den Ist-Reibwert $\mu_{ist}$ aus einem Vergleich zwischen Soll- und Ist-Fahrzeugverzögerung zu errechnen.

Unterhalb des unteren Grenzwerts $\mu_{min}$ des Stabilisierungsbereichs 1 ist ein Minimal-Reibwert $\mu_{Alarm}$ eingetragen. Erreicht der aktuelle Ist-Reibwert $\mu_{ist}$ den Minimal-Reibwert $\mu_{Alarm}$, wird ein Fehlersignal erzeugt und dem Fahrer als Hinweis auf einen Bremsendefekt bzw. auf eine Gefahrensituation angezeigt.

Fig. 2 zeigt eine Darstellung des um den Korrekturfaktor $f_{korr}$ überhöhten Reibwerts, aufgetragen über dem tatsächlichen Ist-Reibwert $\mu_{ist}$. Die Überhöhung des Reibwerts $\mu_{ist}$ erfolgt ausschließlich im Stabilisierungsbereich 1, innerhalb dem die Funktion des überhöhten Reibwerts von einer Ursprungsgeraden abweicht. Im Gradientenbereich 2 weist die Funktion des Reibwerts $\mu_{ist}$ einen Abschnitt 4 mit gegenüber der Ursprungsgeraden überhöhtem Gradienten auf, im Konstantbereich 3 dagegen liegt der entsprechende Abschnitt 5 der Funktion des Reibwerts $\mu_{ist}$ zwar über dem Niveau der Ursprungsgeraden, jedoch auf konstant bleibendem Niveau. Als Folge der Multiplikation mit dem Korrekturfaktor $f_{korr}$ wird im Konstantbereich 3 ein kleiner werdender Ist-Reibwert $\mu_{ist}$ soweit kompensiert, daß trotz reduziertem Ist-Reibwert eine gleichbleibende Bremsverzögerung erreicht wird. Der Korrekturfaktor $f_{korr}$ kann hierbei entweder wie dargestellt zur Multiplikation des ermittelten Ist-Reibwerts $\mu_{ist}$ herangezogen werden, der in die Berechnung des erforderlichen hydraulischen Bremsdrucks einfließt, oder unmittelbar zur Multiplikation des Bremsdrucks oder zur Multiplikation einer sonstigen, den Bremsdruck bzw. die Fahrzeugverzögerung beeinflussenden Größe verwendet werden.

Die Vorrichtung zur variablen Einstellung der Bremskraft in der Bremsanlage eines Kraftfahrzeugs umfaßt ein Regel- und Steuergerät, in dem die zur Einstellung des gewünschten Bremsdrucks erforderlichen Stellsignale erzeugt werden. Hierzu werden dem Regel- und Steuergerät der Ist-Reibwert $\mu_{ist}$ als Eingangssignal zugeführt bzw. es wird der Ist-Reibwert $\mu_{ist}$ aus Meßgrößen berechnet und mit einem Soll-Reibwert $\mu_{soll}$ verglichen. Unterschreitet der Ist-Reibwert $\mu_{ist}$ den Soll-Reibwert $\mu_{soll}$ in unzulässiger Weise und liegt außerdem der Ist-Reibwert $\mu_{ist}$ innerhalb des Stabilisierungsbereichs, erzeugt das Regel- und Steuergerät ein Stellsignal, mit dem der Bremsdruck auf einen mit dem Korrekturfaktor $f_{korr}$ multiplizierten Wert erhöht wird.

In zweckmäßiger Weiterbildung kann zur Verbesserung des Bremsverhaltens vorgesehen sein, daß bei Nässe auch bei ungebremster Fahrt ein geringer Bremsdruck in Höhe von vorteilhaft etwa 3 bar bis 8 bar aufgebaut wird, um durch das Anlegen der Bremsbeläge an die Bremsscheiben einen Wasserfilm auf den Bremsscheiben zu verdrängen. Der geringe Bremsdruck stellt sicher, daß sich keine spürbare, unerwünschte Fahrzeugverzögerung einstellt. Zur Vermeidung unnötiger automatischer Bremsbetätigungen bei Nässe kann es zweckmäßig sein, die Bremsfunktion über einen Regensensor und/oder die Benutzung des Windschutz-Scheibenwischers auszulösen. Gegebenenfalls wird das Motormoment erhöht, beispielsweise durch Erhöhung der eingespritzten Kraftstoffmenge und der entsprechenden Luftzufuhr, um das Bremsmoment zu kompensieren und die Fahrzeuggeschwindigkeit konstant zu halten.

Weiterhin kann die Korrosionsgefahr in der Bremsanlage herabgesetzt werden, indem ein geringer Bremsdruck ohne spürbare Fahrzeugverzögerung aufgebaut wird, wodurch die Temperatur der Bremsanlage auch bei ungebremster Fahrt auf einem geringen, für das Bremsenmaterial unschädlichen Niveau stabilisiert werden kann. Als Folge der erhöhten Bremsentemperatur wird die Feuchtigkeit von der Radbremse weitgehend entfernt bzw. ferngehalten. Als zusätzlicher Effekt wird die Bremsscheibe von Verschmutzung und Streusalz befreit.

Der Aufbau des Bremsdrucks bei ungebremster Fahrt kann intervallweise durchgeführt werden, wobei die Länge der Intervalle bestimmt wird durch die Länge von Fahrzeiten ohne durch den Fahrer ausgelöster Bremsung, von der Scheibenwischereinstellung und von der Bremsbelastung eines vorangegangenen Bremsvorganges.

Zur Verhinderung von Dampfblasenbildung in der Bremsflüssigkeit als Folge einer Bremsenüberhitzung kann der Siedepunkt der Bremsflüssigkeit durch ein gezieltes Einschließen eines Restdrucks in der Bremsanlage erhöht werden, wodurch das Ausgasen des Fluids verhindert wird. Insbesondere bei sehr häufigen und/oder starken Bremsbetätigungen bei zugleich geringer Gaspedalbetätigung besteht Überhitzungsgefahr in der Bremsanlage, der durch Einschließen des Restdrucks entgegengewirkt werden kann. Als weiterer Parameter kann die Betriebszeit der Bremsflüssigkeit seit dem letzten Bremsflüssigkeitswechsel berücksichtigt werden. Der Fahrer wird zweckmäßig auf die Überbeanspruchung der Bremsanlage hingewiesen.

**Patentansprüche**

1. Verfahren zur variablen Einstellung der Bremskraft in einer hydraulischen Bremsanlage eines Kraftfahrzeugs, bei dem ein Bremsdruck erzeugt wird, welcher eine Radbremseinrichtung beaufschlagt,
   **dadurch gekennzeichnet,**

   - **daß** der tatsächliche Ist-Reibwert ($\mu_{ist}$) zwischen Bremsscheibe und Bremsbelag mindestens einer Radbremse ermittelt und mit einem vorgebbaren Soll-Reibwert ($\mu_{soll}$) verglichen wird, und
   - **daß** bei einer unzulässigen Unterschreitung des Ist-Reibwerts ($\mu_{ist}$) gegenüber dem Soll-Reibwert ($\mu_{soll}$) der Bremsdruck oder eine mit dem Bremsdruck korrelierende Größe auf einen mit einem Korrekturfaktor ($f_{korr}$) multiplizierten Wert erhöht wird, sofern der Ist-Reibwert ($\mu_{ist}$) innerhalb eines definierten Reibwert-Stabilisierungsbereichs (1) unterhalb des Soll-Reibwerts ($\mu_{soll}$) liegt, wobei der Korrekturfaktor ($f_{korr}$) auf einen Wert größer als eins gesetzt wird.

2. Verfahren nach Anspruch 1,
   **dadurch gekennzeichnet,**
   **daß** der Reibwert-Stabilisierungsbereich (1) in einen unteren Gradientenbereich (2) und einen oberen Konstantbereich (3) unterteilt wird, wobei im Konstantbereich (3) eine konstante Bremsverzögerung erreichbar ist.

3. Verfahren nach Anspruch 2,
   **dadurch gekennzeichnet,**
   **daß** innerhalb des Konstantbereichs (3) mit abnehmendem Ist-Reibwert ($\mu_{ist}$) der Korrekturfaktor ($f_{korr}$) ansteigt.

4. Verfahren nach Anspruch 3,
   **dadurch gekennzeichnet,**
   **daß** der Korrekturfaktor ($f_{korr}$) linear ansteigt.

5. Verfahren nach einem der Ansprüche 2 bis 4,
   **dadurch gekennzeichnet,**
   **daß** der Korrekturfaktor ($f_{korr}$) im Konstantbereich der Gesetzmäßigkeit

$$f_{korr} = 1 + (\mu_{soll}/\mu_{low} - 1) * (\mu_{soll} - \mu_{ist}) / (\mu_{soll} - \mu_{low})$$

folgt, worin

$\mu_{ist}$     den Ist-Reibwert,
$\mu_{soll}$     den Soll-Reibwert,

$\mu_{low}$    den unteren Reibwert des Konstantbereichs

bezeichnen.

**6.** Verfahren nach einem der Ansprüche 2 bis 5,
**dadurch gekennzeichnet,**
**daß** der Korrekturfaktor ($f_{korr}$) im Gradientenbereich der Gesetzmäßigkeit

$$f_{korr} = 1 + (\mu_{ist} - \mu_{min}) / (\mu_{low} - \mu_{min}) * (\mu_{soll}/\mu_{low} - 1)$$

folgt, worin

$\mu_{min}$    den unteren Reibwert des Gradientenbereichs

bezeichnet.

**7.** Verfahren nach einem der Ansprüche 1 bis 6,
**dadurch gekennzeichnet,**
**daß** ein unterhalb des Stabilisierungsbereichs (1) liegender Minimal-Reibwert ($\mu_{Alarm}$) definiert wird und bei einem Unterschreiten des Minimal-Reibwerts ($\mu_{Alarm}$) ein Fehlersignal erzeugt wird.

**8.** Verfahren nach einem der Ansprüche 2 bis 7,
**dadurch gekennzeichnet,**
**daß** der untere Reibwert ($\mu_{min}$) des Gradientenbereichs (2), der untere Reibwert ($\mu_{low}$) des Konstantbereichs (3) und/oder der Soll-Reibwert ($\mu_{soll}$) in Abhängigkeit von Fahrzeug-Betriebsgrößen, Zustandsgrößen oder Parameter vorgebbar sind.

**9.** Verfahren nach Anspruch 8,
**dadurch gekennzeichnet,**
**daß** mit zunehmender Temperatur der Radbremseinrichtung der untere Reibwert ($\mu_{low}$) des Konstantbereichs (3) in Richtung des unteren Reibwerts ($\mu_{min}$) des Gradientenbereichs (2) verschoben wird.

**10.** Verfahren nach einem der Ansprüche 1 bis 9,
**dadurch gekennzeichnet**
**daß** der Ist-Reibwert ($\mu_{ist}$) aus der gemessenen Fahrzeugverzögerung und dem aktuellen Bremsdruck ermittelt wird.

**11.** Verfahren nach einem der Ansprüche 1 bis 10,
**dadurch gekennzeichnet,**
**daß** bei Feuchtigkeit die Bremsbeläge mit geringem Bremsdruck an die Bremsscheiben angelegt werden.

**12.** Verfahren nach Anspruch 11,
**dadurch gekennzeichnet,**
**daß** das Anlegen der Bremsbeläge an die Bremsscheibe durch ein Signal eines Regensensors ausgelöst wird.

**13.** Verfahren nach Anspruch 11 oder 12,
**dadurch gekennzeichnet,**
**daß** das Anlegen der Bremsbeläge an die Bremsscheibe durch die Inbetriebnahme des Scheibenwischers ausgelöst wird.

**14.** Verfahren nach einem der Ansprüche 1 bis 13,
**dadurch gekennzeichnet,**
**daß** die Bremsbeläge soweit an die Bremsscheibe angelegt werden, daß die Temperatur der Radbremseinrichtung etwa eine SollTemperatur einnimmt.

**15.** Vorrichtung zur variablen Einstellung der Bremskraft in einer hydraulischen Bremsanlage eines Kraftfahrzeugs, mit einem Regel- und Steuergerät zur Generierung von Stellsignalen zur Einstellung des Bremsdrucks in einer Radbremseinrichtung,
**dadurch gekennzeichnet,**

- **daß** dem Regel- und Steuergerät als Eingangssignal der tatsächliche Ist-Reibwert ($\mu_{ist}$) zwischen Bremsscheibe und Bremsbelag mindestens einer Radbremse zugeführt oder daß dieser Ist-Reibwert in dem Regel- und Steuergerät aus Meßgrößen berechnet wird, und daß der Ist-Reibwert mit einem vorgebbaren Soll-Reibwert ($\mu_{soll}$) verglichen wird, und
- **daß** bei einer unzulässigen Unterschreitung des Ist-Reibwerts ($\mu_{ist}$) gegenüber dem Soll-Reibwert ($\mu_{soll}$) in dem Regel- und Steuergerät ein Stellsignal generiert wird, mit dem der Bremsdruck auf einen mit einem Korrekturfaktor multiplizierten Wert erhöht wird, wenn der Ist-Reibwert ($\mu_{ist}$) innerhalb eines definierten Reibwert-Stabilisierungsbereichs (1) unterhalb des Soll-Reibwerts ($\mu_{soll}$) liegt.

**Claims**

1. A process for the variable adjustment of the braking force in a hydraulic braking system in a motor vehicle in which a braking pressure is generated and applied to a wheel braking device,
   **characterised in that**

   - the effective actual coefficient of friction ($U_{act}$) between brake disk and brake pad of at least one wheel brake is measured and compared with a predeterminable reference coefficient of friction ($\mu_{ref}$), and
   - if the actual coefficient of friction ($\mu_{act}$) impermissibly falls below the reference coefficient of friction ($\mu_{ref}$), the brake pressure or a value correlating with the brake pressure is increased to a value multiplied by a correction factor ($f_{corr}$) in so far as the actual coefficient of friction ($\mu_{act}$) lies within a defined coefficient of friction stabilisation range (1) below the reference coefficient of friction ($\mu_{ref}$), the correction factor ($f_{corr}$) being set at a value greater than one.

2. A process in accordance with claim 1,
   **characterised in that**
   the coefficient of friction stabilisation range (1) is divided into a lower gradient range (2) and an upper constant range (3), constant braking deceleration being achievable in the constant range (3).

3. A process in accordance with claim 2,
   **characterised in that**
   within the constant range (3), the correction factor ($f_{corr}$) increases as the actual coefficient of friction ($\mu_{act}$) decreases.

4. A process in accordance with claim 3,
   **characterised in that**
   the correction factor ($f_{corr}$) increases in a linear manner.

5. A process in accordance with one of claims 2 to 4,
   **characterised in that**
   in the constant range the correction factor ($f_{corr}$) follows the regularity:

$$f_{corr} = 1 + (\mu_{ref}/\mu_{low} - 1) * (\mu_{ref}/\mu_{act}) / (\mu_{ref}/\mu_{low})$$

   where

   $\mu_{act}$ is the actual coefficient of friction
   $\mu_{ref}$ is the reference coefficient of friction
   $\mu_{low}$ is the lower coefficient of friction in the constant range.

6. A process in accordance with one of claims 2 to 5,
   **characterised in that**
   in the gradient range the correction factor ($f_{corr}$) follows the regularity:

$$f_{corr} = 1 + (\mu_{ref}/\mu_{min}) / (\mu_{low}/\mu_{min}) * (\mu_{ref}/\mu_{low} - 1)$$

where

$\mu_{min}$ is the lower coefficient of friction in the gradient range.

**7.** A process in accordance with one of claims 1 to 6,
**characterised in that**
a minimum coefficient of friction ($\mu_{alarm}$) lying below the stabilisation range (1) is defined and where it lies below the minimum coefficient of friction ($\mu_{alarm}$) an error signal is generated.

**8.** A process in accordance with one of claims 2 to 7,
**characterised in that**
the lower coefficient of friction ($\mu_{min}$) of the gradient range (2), the lower coefficient of friction ($\mu_{low}$) of the constant range (3) and/or the reference coefficient of friction ($\mu_{ref}$) may be predetermined dependent upon vehicle operating characteristics, state variables or parameters.

**9.** A process in accordance with claim 8,
**characterised in that**
as the temperature of the wheel braking device increases, the lower coefficient of friction ($\mu_{low}$) of the constant range (3) is pushed towards the lower coefficient of friction ($\mu_{min}$) of the gradient range (2).

**10.** A process in accordance with one of claims 1 to 9,
**characterised in that**
the actual coefficient of friction ($\mu_{act}$) is calculated from the measured vehicle deceleration and the current braking pressure.

**11.** A process in accordance with one of claims 1 to 10,
**characterised in that**
when damp the brake pads are applied to the brake disks with low braking pressure.

**12.** A process in accordance with claim 11,
**characterised in that**
the application of the brake pads to the brake disks is triggered by a signal from a rain sensor.

**13.** A process in accordance with claim 11 or 12,
**characterised in that**
the application of the brake pads to the brake disks is triggered by the actuation of the windscreen wipers.

**14.** A process in accordance with one of claims 1 to 13,
**characterised in that**
the brake pads are applied to the brake disks until the temperature of the wheel braking device approximately reaches a reference temperature.

**15.** A device for the variable adjustment of the braking force in a hydraulic braking system in a motor vehicle with a control device to generate control signals to adjust the braking pressure in a wheel braking device,
**characterised in that**

- either the effective actual coefficient of friction ($\mu_{act}$) between brake disk and brake pad of at least one braking device is fed to the control device as an input signal or this actual coefficient of friction is calculated in the control device from measured variables, and the actual coefficient of friction is compared with a predeterminable reference coefficient of friction ($\mu_{ref}$), and
- if the actual coefficient of friction ($\mu_{act}$) impermissibly falls below the reference coefficient of friction ($\mu_{ref}$), a control signal is generated in the control device with which the braking pressure is increased to a value multiplied by a correction factor if the actual coefficient of friction ($\mu_{act}$) lies within a defined coefficient of friction stabilisation range (1) below the reference coefficient of friction ($\mu_{ref}$).

**Revendications**

1.  Procédé pour régler de façon variable la force de freinage dans un système de freinage hydraulique d'un véhicule automobile, dans lequel on engendre une pression de freinage qui alimente ou sollicite un dispositif de frein de roues,
    **caractérisé**

    - **en ce que** l'on détermine le coefficient de frottement réel effectif ($\mu_{\text{réel}}$) entre le disque de frein et la garniture de frein d'au moins un frein de roue, et on le compare à un coefficient de frottement de consigne ($\mu_{\text{cons}}$) pouvant être prescrit, et
    - **en ce que** dans le cas d'un écart vers le bas, non admissible, du coefficient de frottement réel ($\mu_{\text{réel}}$) par rapport au coefficient de frottement de consigne ($\mu_{\text{cons}}$), on augmente la pression de freinage ou une grandeur en corrélation avec la pression de freinage, à une valeur multipliée par un facteur de correction ($f_{\text{corr}}$), dans la mesure où le coefficient de frottement réel ($\mu_{\text{réel}}$) se situe à l'intérieur d'une plage de stabilisation de coefficient de frottement (1) définie, en-dessous du coefficient de frottement de consigne ($\mu_{\text{cons}}$), le facteur de correction ($f_{\text{corr}}$) étant fixé à une valeur supérieure à un.

2.  Procédé selon la revendication 1, **caractérisé en ce que** la plage de stabilisation de coefficient de frottement (1) est subdivisée en une plage de variation ou plage de gradient inférieure (2) et une plage constante supérieure (3), un ralentissement de freinage constant pouvant être obtenu dans la plage constante (3).

3.  Procédé selon la revendication 2, **caractérisé en ce qu'**à l'intérieur de la plage constante (3), le facteur de correction ($f_{\text{corr}}$) augmente lorsque le coefficient de frottement réel ($\mu_{\text{réel}}$) diminue.

4.  Procédé selon la revendication 3, **caractérisé en ce que** le facteur de correction ($f_{\text{corr}}$) augmente de façon linéaire.

5.  Procédé selon l'une des revendications 2 à 4,
    **caractérisé en ce que** le facteur de correction ($f_{\text{corr}}$), dans la plage constante, satisfait à la loi suivante

    $$f_{\text{corr}} = 1 + (\mu_{\text{cons}}/\mu_{\text{bas}} - 1) * (\mu_{\text{cons}} - \mu_{\text{réel}}) / (\mu_{\text{cons}} - \mu_{\text{bas}}),$$

    dans laquelle

    $\mu_{\text{réel}}$ est le coefficient de frottement réel,
    $\mu_{\text{cons}}$ est le coefficient de frottement de consigne,
    $\mu_{\text{bas}}$ est le coefficient de frottement inférieur de la plage constante.

6.  Procédé selon l'une des revendications 2 à 5,
    **caractérisé en ce que** le facteur de correction ($f_{\text{corr}}$), dans la plage de gradient, satisfait à la loi suivante

    $$f_{\text{corr}} = 1 + (\mu_{\text{réel}} - \mu_{\text{min}}) / (\mu_{\text{bas}} - \mu_{\text{min}}) * (\mu_{\text{cons}}/\mu_{\text{bas}} - 1),$$

    dans laquelle

    $\mu_{\text{min}}$ est le coefficient de frottement inférieur de la plage de gradient.

7.  Procédé selon l'une des revendications 1 à 6,
    **caractérisé en ce que** l'on définit un coefficient de frottement minimal ($\mu_{\text{alarme}}$) situé en-dessous de la plage de stabilisation (1), un signal de défaut étant engendré lorsque l'on passe en-dessous du coefficient de frottement minimal ($\mu_{\text{alarme}}$).

8.  Procédé selon l'une des revendications 2 à 7,
    **caractérisé en ce que** le coefficient de frottement inférieur ($\mu_{\text{min}}$) de la plage de gradient (2), le coefficient de frottement inférieur ($\mu_{\text{bas}}$) de la plage constante (3) et/ou est le coefficient de frottement de consigne ($\mu_{\text{cons}}$) peuvent être prescrits en fonction de grandeurs de fonctionnement, de grandeurs d'état ou de paramètres du véhicule.

9. Procédé selon la revendication 8, **caractérisé en ce qu'**avec l'augmentation de la température du dispositif de frein de roue, on décale le coefficient de frottement inférieur ($\mu_{bas}$) de la plage constante (3) en direction du coefficient de frottement inférieur ($\mu_{min}$) de la plage de gradient (2).

10. Procédé selon l'une des revendications 1 à 9,
    **caractérisé en ce que** coefficient de frottement réel ($\mu_{réel}$) est déterminé à partir du ralentissement du véhicule mesuré et de la pression de freinage actuelle.

11. Procédé selon l'une des revendications 1 à 10,
    **caractérisé en ce qu'**en cas d'humidité, les garnitures de frein sont appliquées contre les disques de frein avec une faible pression de freinage.

12. Procédé selon la revendication 11, **caractérisé en ce que** l'application des garnitures de frein contre le disque de frein est déclenchée par un signal d'un détecteur de pluie.

13. Procédé selon la revendication 11 ou 12, **caractérisé en ce que** l'application des garnitures de frein contre le disque de frein est déclenchée par la mise en marche des essuie-glaces.

14. Procédé selon l'une des revendications 1 à 13,
    **caractérisé en ce que** les garnitures de frein sont appliquées contre le disque de frein jusqu'à ce que la température du dispositif de frein de roues prenne sensiblement la valeur d'une température de consigne.

15. Dispositif pour régler de façon variable la force de freinage dans un système de freinage hydraulique d'un véhicule automobile, comportant un appareil de régulation et de commande destiné à engendrer des signaux de réglage pour régler la pression de freinage dans un dispositif de frein de roues,
    **caractérisé**

    - **en ce que** le coefficient de frottement réel effectif ($\mu_{réel}$) entre le disque de frein et la garniture de frein d'au moins un frein de roue est transmis à l'appareil de régulation et de commande en guise de signal d'entrée, ou en ce que ce coefficient de frottement réel est calculé dans l'appareil de régulation et de commande à partir de grandeurs mesurées, et en ce que le coefficient de frottement réel est comparé à un coefficient de frottement de consigne ($\mu_{cons}$) pouvant être prescrit, et
    - **en ce que** dans le cas d'un écart vers le bas, non admissible, du coefficient de frottement réel ($\mu_{réel}$) par rapport au coefficient de frottement de consigne ($\mu_{cons}$), dans l'appareil de régulation et de commande est engendré un signal de réglage avec lequel la pression de freinage est augmentée à une valeur multipliée par un facteur de correction lorsque le coefficient de frottement réel ($U_{réel}$) se situe à l'intérieur d'une plage de stabilisation de coefficient de frottement (1) définie, en-dessous du coefficient de frottement de consigne ($\mu_{cons}$).

Fig.1

Fig.2